# EUROPÄISCHE PATENTSCHRIFT

(11) **EP 1 280 690 B1**
(45) Veröffentlichungstag und Bekanntmachung des Hinweises auf die Patenterteilung: **28.12.2005**
(21) Anmeldenummer: 01936014.8
(22) Anmeldetag: 28.04.2001
(51) Int. Cl.: B61D 19/00, B61D 19/02, B60J 10/08, E06B 7/23

(54) **ZWEIFLÜGLIGE SCHWENKSCHIEBETÜR FÜR FAHRZEUGE ZUR PERSONENBEFÖRDERUNG**
DOUBLE-LEAFED SWING-PLUG DOOR FOR PEOPLE-CARRYING VEHICLES
PORTE COULISSANTE ET LOUVOYANTE A DEUX BATTANTS POUR VEHICULES DE TRANSPORT DE PERSONNES

(30) Priorität: 06.05.2000 DE 10022050
(43) Veröffentlichungstag der Anmeldung: 05.02.2003
(73) Patentinhaber: Gebr. Bode GmbH & Co. KG, 34123 Kassel (DE)
(72) Erfinder: SCHWARZ, Klaus-Peter, 34277 Fuldabrück (DE)
(74) Vertreter: Feder, Wolf-Dietrich
(86) Internationale Anmeldenummer: PCT/DE2001/001641
(87) Internationale Veröffentlichungsnummer: WO 2001/085518

(56) Entgegenhaltungen:
- DE-A- 4 413 269
- US-A- 3 745 707
- US-A- 3 984 942
- US-A- 4 150 509

## Beschreibung

Die Erfindung betrifft eine zweiflüglige Schwenkschiebetür für Fahrzeuge zur Personenbeförderung mit den Merkmalen aus dem Oberbegriff des Patentanspruchs 1. Eine derartige Schwenkschiebetür ist an sich bekannt und beispielsweise in DE 43 16 253 A1 beschrieben. Eine Schiebetür für Schienenfahrzeuge mit einem innerhalb des Türrahmens angeordneten umlaufenden Portalrahmen, in den eine aufblasbare Dichtung integriert ist, ist aus der US-A-3 984 942 bekannt.

Es ist auch bekannt, insbesondere für moderne Hochgeschwindigkeitszüge die zwischen Türblatt und Türrahmen angeordnete umlaufende Dichtung als aufblasbare Dichtung auszubilden, um zu verhindern, daß ein äußerer Druckanstieg auf das Fahrzeuginnere übertragen wird. Derartige aufblasbare Dichtungen sind, wie beispielsweise in DE 298 02 987 U1 beschrieben, im allgemeinen am Türblatt befestigt, während sich am Türrahmen entsprechende ebene Dichtungsflächen befinden. Es hat sich aber gezeigt, daß ein solches Dichtungssystem bei zweiflügligen Schwenkschiebetüren nicht zu befriedigenden Ergebnissen führt und derartige Türen einen erheblichen Montage- und Justieraufwand benötigen.

Der Erfindung liegt die Aufgabe zugrunde, eine zweiflüglige Schwenkschiebetür mit den Merkmalen aus dem Oberbegriff des Patentanspruchs 1 so auszubilden, daß eine druckertüchtigte Tür erhalten wird, die beim Einbau nur einen geringen Montage- und Justieräufwand erfordert.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, eine vollständig umlaufende aufblasbare Dichtung zwischen den Türblättern und dem Türrahmen vorzusehen, die aber nicht wie bei bekannten Lösungen am Türblatt angeordnet ist, sondern an einem umlaufenden Portalrahmen, der bei der Montage fest in den Türrahmen eingesetzt wird. An den Türblättern sind lediglich ebene Dichtungsflächen angeordnet, an die sich bei geschlossener Tür die aufblasbare Dichtung anlegt. Um den vertikalen Spalt zwischen den Türblättern gut abzudichten kann zusätzlich vorgesehen sein, daß der an sich bekannte, an den vertikalen einander zugewandten Schließkanten der Türblätter angeordnete Fingerschutzgummi ebenfalls als aufblasbare Dichtung ausgebildet ist.

Die Anordnung und Ausbildung dieser aufblasbaren Dichtungen gewährleistet eine besonders gute Abdichtung der Schwenkschiebetür gegenüber Druckschwankungen. Weiterhin ist es möglich, die Dichtungsprofile für die umlaufende aufblasbare Dichtung und die Fingerschutzgummis so auszubilden, daß, je nach Bedarfsfall eine Anwendung mit oder ohne Aufblasen der Dichtung möglich ist.

Dadurch, daß der Portalrahmen als in den Türrahmen eingesetztes und in ihm lösbar befestigtes Bauelement ausgebildet werden kann, ist die Montage und Justierung der Schwenkschiebetür in besonders einfacher und wirksamer Weise möglich, indem Portalrahmen und Türblätter als eine lösbar aneinander befestigbare Baueinheit in den Türrahmen eingesetzt werden können. Eine Einrichtung und ein Verfahren hierzu sind Gegenstand einer parallelen Patentanmeldung mit gleichem Zeitrang.

Im folgenden wird anhand der beigefügten Zeichnungen ein Ausführungsbeispiel für eine zweiflüglige Schwenkschiebetür nach der Erfindung näher erläutert.

In den Zeichnungen zeigen:
Fig. 1 eine zweiflüglige Schwenkschiebetür in einer Ansicht von innen ohne die im Bereich F oberhalb der Türblätter im Türrahmen angeordneten Antriebs-und Führungsvorrichtungen;
Fig. 2 eine Ansicht der Schwenkschiebetür nach Fig. 1 in Richtung Z mit den Antriebs- und Führungsvorrichtungen für die Türblätter;
Fig. 2A den Bereich Z1 aus Fig. 2 bei geöffneter Tür;
Fig. 3 einen Schnitt nach der Linie A-A in Fig. 1;
Fig. 4 einen Schnitt nach der Linie B-B in Fig. 1;
Fig. 5 einen Schnitt nach der Linie C-C in Fig. 1;
Fig. 6 einen Schnitt nach der Linie D-D in Fig. 1;
Fig. 7 einen Schnitt nach der Linie E-E in Fig. 1 in vergrößerter Darstellung mit Teilen der Antriebs- und Führungsvorrichtungen;
Fig. 8 in vergrößerter Darstellung einen Schnitt durch das umlaufende Dichtungsprofil gemäß den Fig. 4 bis 7;
Fig. 9 in vergrößerter Darstellung einen Schnitt durch die Dichtungsprofile der Fingerschutzgummis der Türblätter;
Fig. 10 in perspektivischer vergrößerter Darstellung die Fingerschutzgummis der Türblätter im Bereich ihres oberen Endes.

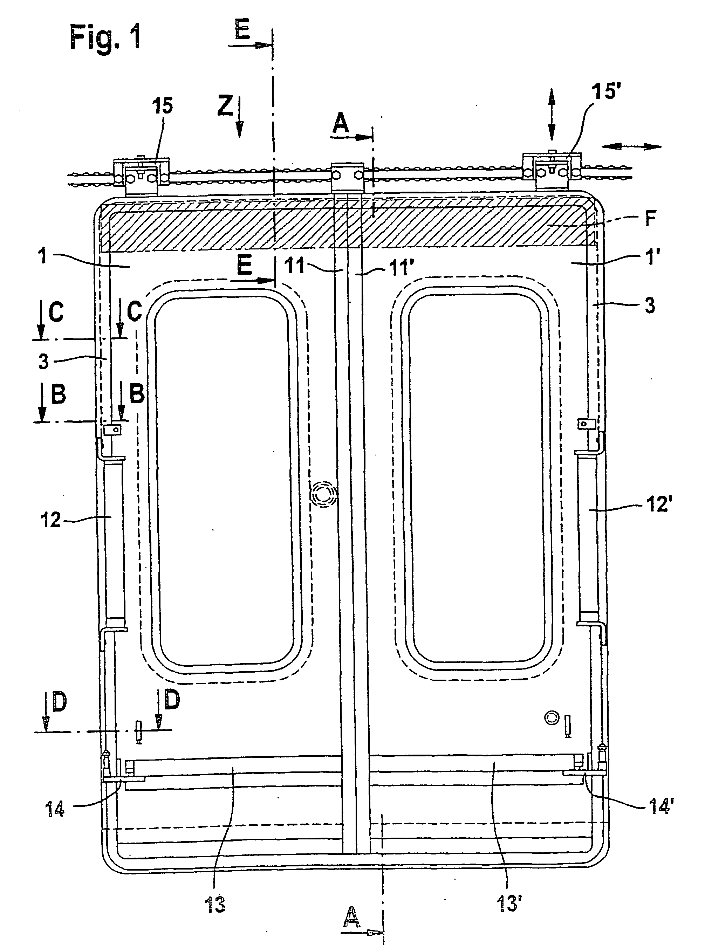

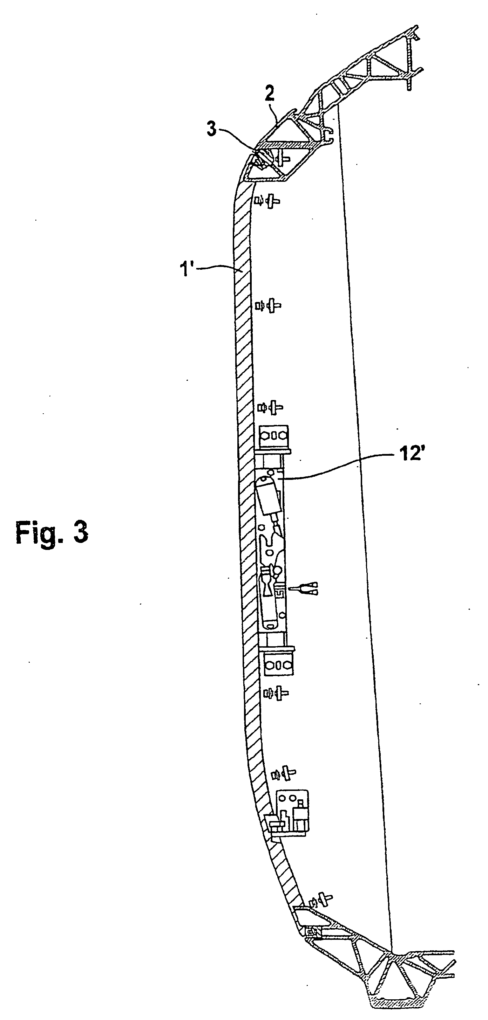

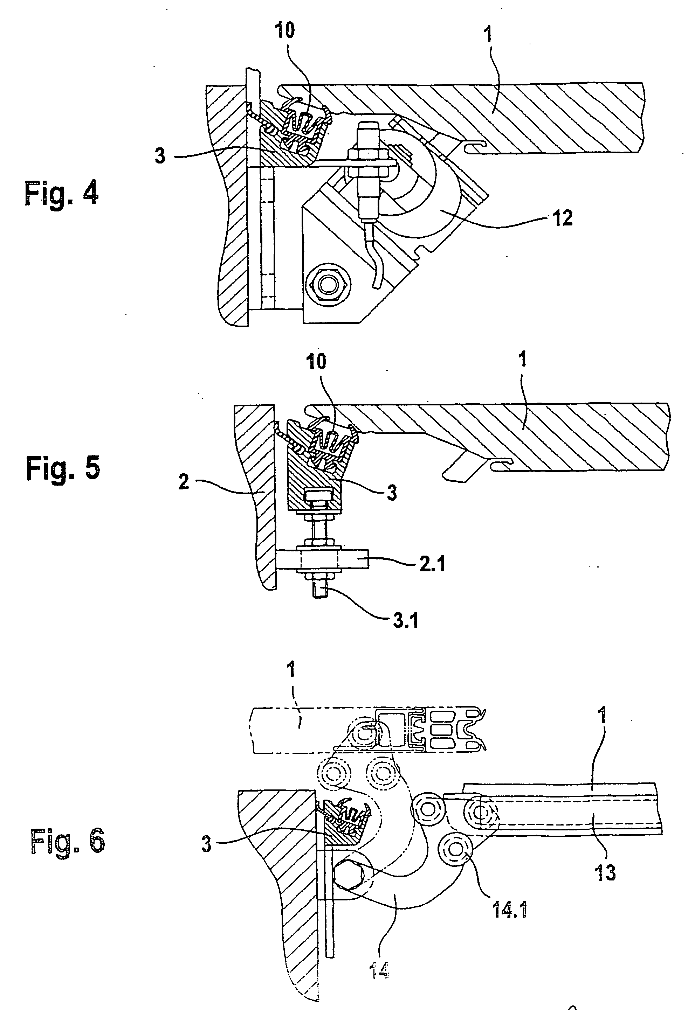

Die Fig. 1 bis 7 zeigen eine in einem nicht dargestellten Fahrzeug eingebaute zweiflüglige Schwenkscbiebetür.

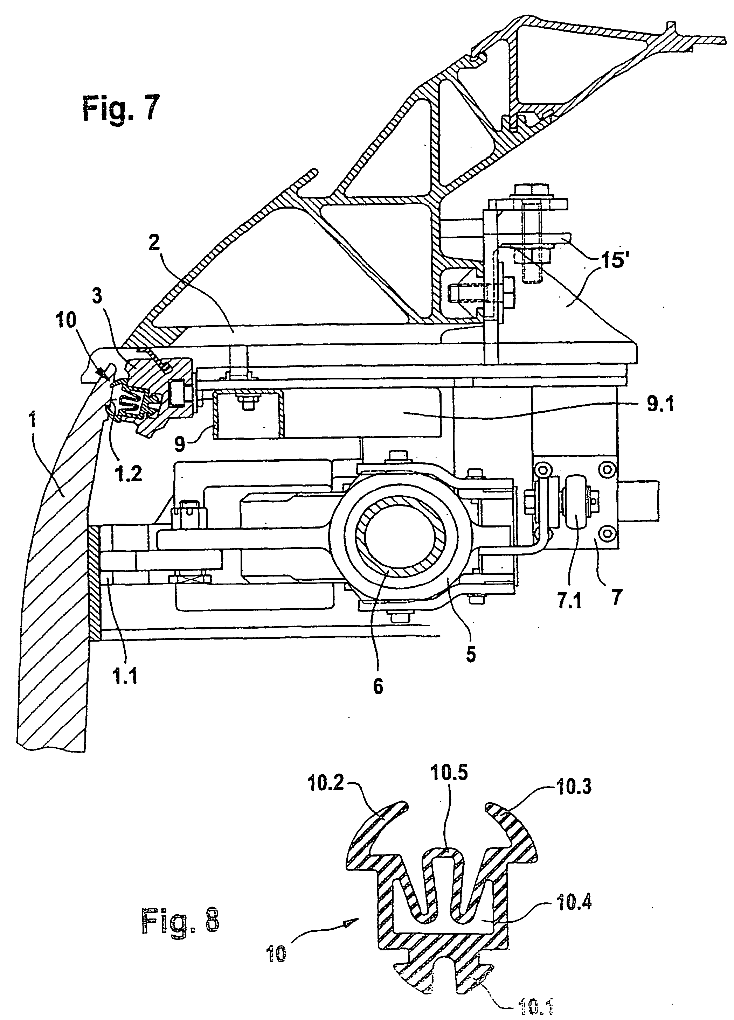

In Fig. 1 sind aus Gründen der Übersichtlichkeit die Antriebs- und Führungsvorrichtungen nicht dargestellt. Sie sind grundsätzlich im schraffierten Bereich F angeordnet und über Befestigungswinkel 15 bzw. 15' mit dem Türrahmen 2 verbunden (siehe auch Fig. 7).

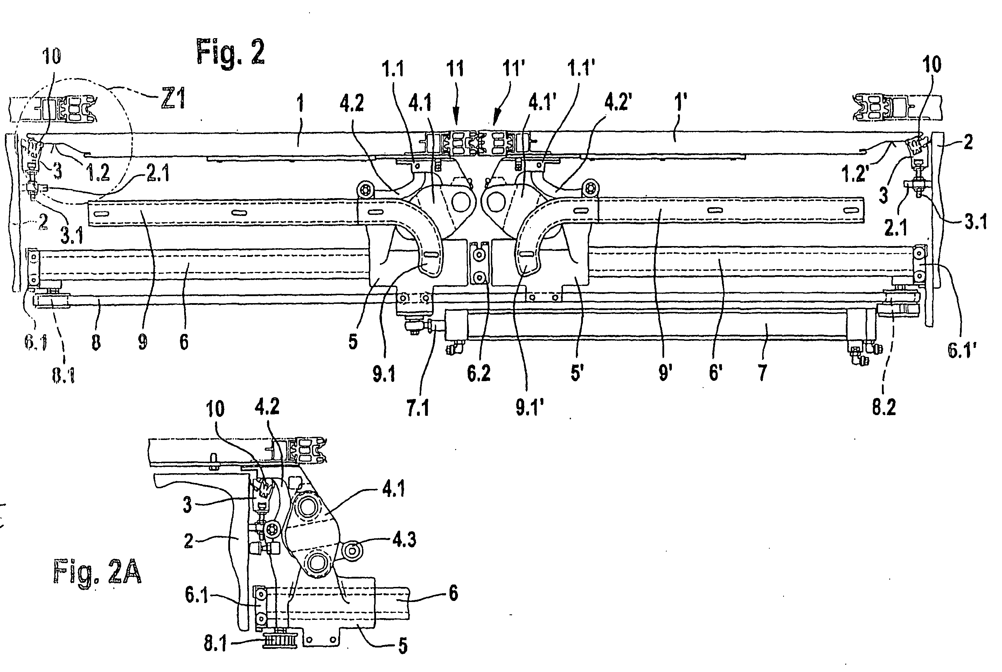

Die beiden Türblätter 1 und 1' sind jeweils über ein Parallelogrammgestänge, das aus einem Schwenkarm 4.1 bzw. 4.1' und einem gekrümmten Stützarm 4.2 bzw. 4.2' besteht, mit einem Tragglied 5 bzw. 5' verbunden, welches beispielsweise als Kugelhülse ausgebildet sein kann und an einem als Rundstange ausgebildeten horizontal in Fahrzeuglängsrichtung verlaufenden Führungselement 6 bzw. 6' verschiebbar geführt ist. Das Führungselement 6 bzw. 6' ist über Befestigungsvorrichtungen 6.1, 6.1' und 6.2 fest mit dem Türrahmen 2 verbunden. Der Schwenkarm 4.1 bzw. 4.1' ist mit einem am Türblatt angeordneten Tragarm 1.1 bzw. 1.1' einerseits und dem Tragglied 5 bzw. 5' andererseits jeweils über eine vertikal stehende Drehachse verbunden. Ebenso ist der Stützarm 4.2 bzw. 4.2' jeweils über vertikal stehende Drehachsen mit dem Tragarm 1.1 bzw. 1.1' und dem Tragglied 5 bzw. 5' verbunden. Am Schwenkarm 4.1 ist, wie aus Fig. 2A ersichtlich, ein Führungshebel mit einer Steuerrolle 4.3 angeordnet, die in eine fest mit dem Türrahmen 2 verbundene Führungsschiene 9 bzw. 9' eingreift, wobei die Führungsschienen 9 und 9' parallel zu den Führungselementen 6 und 6' verlaufen und an ihren einander zugewandten Enden in einer Krümmung 9.1 bzw. 9.1' zum Fahrzeuginneren hin geführt sind.

Die Antriebsvorrichtung der Tür besitzt einen Pneumatikzylinder 7, dessen Abtriebselement 7.1 mit dem Tragglied 5 verbunden ist, das seinerseits mit dem einen Trum eines parallel zu den Führungselementen 6 und 6' geführten Zahnriemens 8 verbunden ist. Der Zahnriemen 8 läuft an seinen beiden Enden über Umlenkrollen 8.1 und 8.2 und an seinem anderen Trum ist das Tragglied 5' befestigt, so daß bei einer Bewegung des Traggliedes 5 vom Pneumatikzylinder 7 aus das Tragglied 5' eine gegenläufige Bewegung ausführt.

Die Türblätter 1 und 1' besitzen an den voneinander abgewandten Innenkanten sowie an der oberen und unteren Innenkante ebene Dichtungsflächen 1.2 bzw. 1.2', die unter einer vorgegebenen Abschrägung zur vertikalen Türebene verlaufen. In den Türrahmen 2 ist ein umlaufender Portalrahmen 3 eingesetzt und über Schraubbefestigungen 3.1 mit fest am Türrahmen 2 angeordneten Befestigungslaschen 2.1 verbunden. An der nach außen weisenden Seite des Portalrahmens 3 ist eine vollständig umlaufende aufblasbare Dichtung 10 angeordnet, an die sich, wie in Fig. 2 dargestellt, im geschlossenen Zustand der Tür die Dichtungsflächen 1.2 bzw. 1.2' der Türblätter anlegen. Nach dem Aufblasen der umlaufenden Dichtung 10 mittels nicht dargestellter Einrichtungen, ist entlang der Außenkanten der beiden Türblätter 1 und 1' eine gute Abdichtung gegen Druckschwankungen gewährleistet. An den im geschlossenen Zustand einander direkt gegenüberliegenden vertikalen Innenkanten 1.3 bzw. 1.3' der Türblätter 1 bzw. 1' sind Fingerschutzgummis 11 bzw. 11' angeordnet, die ebenfalls als aufblasbare Dichtungsprofile ausgebildet sind und weiter unten genauer beschrieben werden. Durch Aufblasen der Dichtungsprofile 11 und 11' durch ebenfalls nicht dargestellte Einrichtungen ist auch der Bereich des Spaltes zwischen den beiden Türblättern 1 und 1' gegen Druckschwankungen abgedichtet.

Wie aus den Fig. 1, 3 und 4 ersichtlich, sind an den vertikalen Seitenkanten des Türrahmens 2 Verriegelungseinrichtungen 12 bzw. 12' bekannter Bauart angeordnet, durch welche die beiden Türblätter 1 bzw. 1' im geschlossenen Zustand der Tür mittels Drehfallenverriegelungen verriegelt werden.

Wie aus den Fig. 1 und 6 zu erkennen, sind im unteren Bereich der Türblätter 1 bzw. 1' Führungsvorrichtungen an sich bekannter Bauart angeordnet, die jeweils einen Führungsrollen 14.1 tragenden schwenkbaren Rollenhebel 14 bzw. 14' aufweisen, wobei die Führungsrollen 14.1 in und an Führungsschienen 13 bzw. 13' geführt sind, die im unteren Bereich an den Türblättern 1 und 1' in einer Richtung parallel zu den Führungselementen 6 und 6' verlaufend angeordnet sind.

Im folgenden wird die Ausbildung der Dichtungsprofile anhand der Fig. 8 bis 10 genauer erläutert.

Die im Portalrahmen 3 angeordnete umlaufende aufblasbare Dichtung ist als Dichtungsprofil 10 ausgebildet (Fig. 8) mit einem im Portalrahmen 3 befestigten Dichtungsfuß 10.1 und zwei im Bereich der Vorderkanten symmetrisch zu einer senkrecht zur Dichtungsebene stehenden Mittelebene angeordneten Dichtungslippen 10.2 und 10.3. Zwischen den Dichtungslippen 10.2 und 10.3 ist der aufblasbare Teil der Dichtung angeordnet mit einer Luftkammer 10.4, die in nicht dargestellter Weise an eine Druckquelle angeschlossen ist und die an ihrer im geschlossenen Zustand der Tür den Dichtungsflächen 1.2 bzw. 1.2' der Türblätter gegenüberliegenden Seite mit einer sich bei Druckanstieg nach außen wölbenden Dichtungsmembran 10.5 abgeschlossen ist.

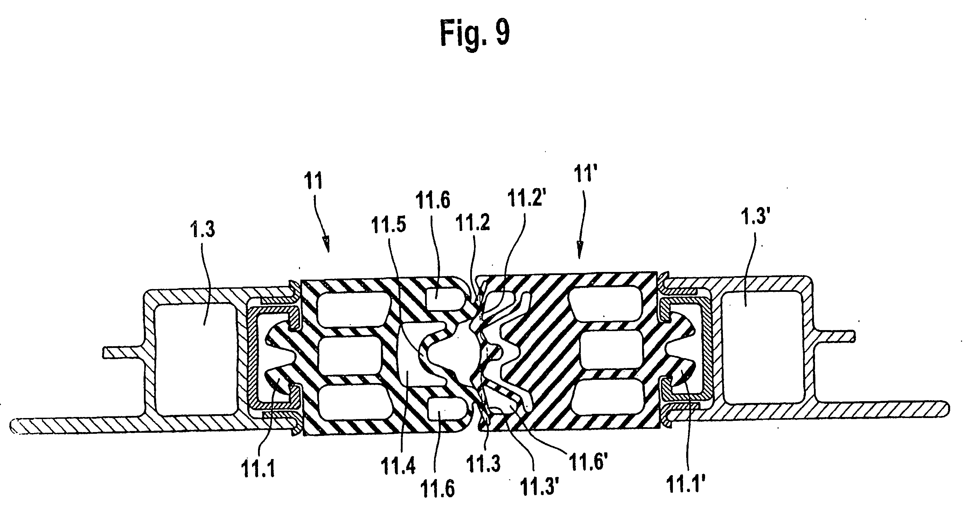

Wie aus Fig. 9 zu entnehmen, sind auch die Fingerschutzgummis als Dichtungsprofile 11 und 11' ausgebildet mit jeweils einem an den vertikalen Kanten 1.3 bzw. 1.3' der Türblätter befestigten Dichtungsfuß 11.1 bzw. 11.1' sowie Druckkammern 11.6 und 11.6', die in nicht dargestellter Weise an den Türantrieb umsteuernde Sensoren angeschlossen sein können und jeweils einer Luftkammer 11.4 bzw. 11.4', die in nicht dargestellter Weise an eine Druckluftquelle anschließbar ist und an ihrer im geschlossenen Zustand der Tür dem jeweils anderen Fingerschutzgummi gegenüberliegenden Seite mit einer sich bei Druckanstieg nach außen wölbenden Dichtungsmembran 11.5 bzw. 11.5' abgeschlossen ist. Das Dichtungsprofil 11 weist zu beiden Seiten der Luftkammer 11.4 an der dem anderen Dichtungsprofil 11' gegenüberliegenden Außenseite zwei symmetrisch zu einer senkrecht zur Dichtungsebene stehenden Mittelebene angeordnete Dichtungslippen 11.2 und 11.3 auf, die sich im geschlossenen Zustand der Tür an ihnen gegenüberliegende Dichtungsflächen 11.2' bzw. 11.3' des Dichtungsprofils 11' anlegen.

Die Ausbildung der Dichtungsprofile gemäß den Fig. 8 und 9 eröffnet die Möglichkeit, die oben beschriebene Schwenkschiebetür je nach Bedarfsfall in der Weise zu betreiben, daß entweder die Abdichtung nur durch die an den Dichtungen angeordneten Dichtungslippen erfolgt oder wenn eine höhere Druckdichtigkeit erwünscht ist mittels der aufgeblasenen Dichtungsprofile.

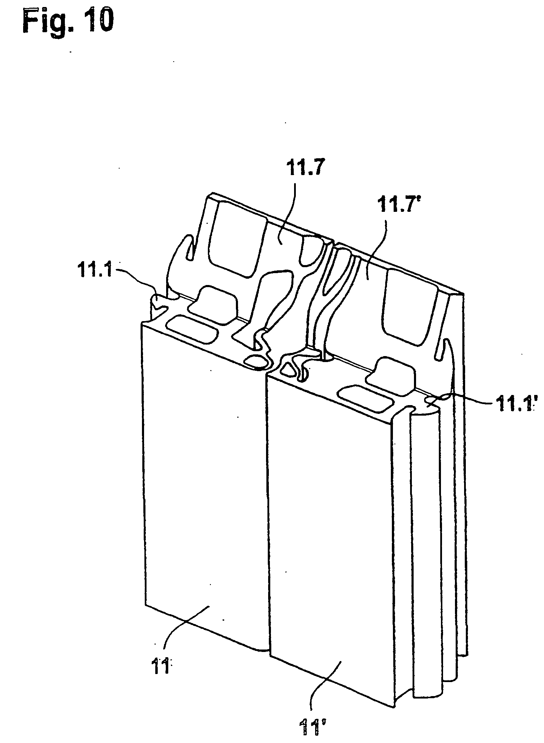

Fig. 10 zeigt die in bezug auf die Abdichtung besonders kritische Übergangsstelle am oberen Ende des Türspaltes. Um hier eine gute Abdichtung zu erreichen, besitzen die Fingerschutzgummis 11 und 11' im Bereich der oberen und unteren Enden der Schließkanten an den nach außen weisenden Seiten jeweils nach oben bzw. nach unten gerichtete Ansätze 11.7 bzw. 11.7', deren Innenflächen zu den Dichtungsflächen 1.2 bzw. 1.2' der Türblätter 1 bzw. 1' fluchten und an die sich im geschlossenen Zustand der Tür die umlaufende aufblasbare Dichtung 10 des Portalrahmens 3 anlegt.

## Patentansprüche

1. Zweiflüglige Schwenkschiebetür für Fahrzeuge zur Personenbeförderung mit zwei Türblättern, die jeweils über ein Parallelogrammgestänge mit einem Tragglied verbunden sind, das horizontal in Fahrzeuglängsrichtung auf einem Führungselement verschiebbar ist, wobei Einrichtungen zur Führung jedes Türblattes in Querrichtung vorgesehen sind und die Längsbewegung jedes Türblattes mit der Querbewegung durch eine mit dem Türrahmen fest verbundene Führungsschiene koordiniert ist, in welche ein mit dem Türblatt verbundenes Führungsmittel eingreift und mit einer Antriebsvorrichtung, deren Abtriebskraft in Richtung des Führungselements an jedem Tragglied zu deren gegenläufiger Bewegung angreift und bei der an den vertikalen, einander zugewandten Schließkanten der Türblätter Fingerschutzgummis angeordnet sind, **dadurch gekennzeichnet, daß** innerhalb des Türrahmens (2) ein umlaufender Portalrahmen (3) angeordnet ist, in den eine vollständig umlaufende aufblasbare Dichtung (10) integriert ist, der im geschlossenen Zustand der Tür an den Türblättern (1, 1') angeordnete Dichtungsflächen (1.2, 1.2') gegenüberliegen.

2. Schwenkschiebetür nach Anspruch 1, **dadurch gekennzeichnet, daß** die Fingerschutzgummis als aufblasbare Dichtungen (11, 11') ausgebildet sind.

3. Schwenkschiebetür nach Anspruch 1, **dadurch gekennzeichnet, daß** der Portalrahmen (3) als in den Türrahmen eingesetztes und in ihm mittels Schraubverbindungen (3.1) lösbar befestigtes Bauelement ausgebildet ist.

4. Schwenkschiebetür nach einem der Ansprüche 1 bis 3, **dadurch gekennzeichnet, daß** die Fingerschutzgummis (11, 11') im Bereich der oberen und unteren Enden der Schließkanten (1.3, 1.3') an den nach außen weisenden Seiten jeweils nach oben bzw. unten gerichtete Ansätze (11.6, 11.6') aufweisen, deren Innenflächen zu den Dichtungsflächen (1.2, 1.2') der Türblätter (1, 1') fluchten und an die sich im geschlossenen Zustand der Tür die umlaufende aufblasbare Dichtung (10) des Portalrahmens (3) anlegt.

5. Schwenkschiebetür nach einem der Ansprüche 1 bis 4, **dadurch gekennzeichnet, daß** die im Portalrahmen (3) angeordnete umlaufende aufblasbare Dichtung (10) als Dichtungsprofil ausgebildet ist mit einem im Portalrahmen befestigten Dichtungsfuß (10.1) und zwei symmetrisch zu einer senkrecht zur Dichtungsebene stehenden Mittelebene angeordneten Dichtungslippen (10.2, 10.3), wobei zwischen den Dichtungslippen der aufblasbare Dichtungsteil angeordnet ist mit einer Luftkammer (10.4), die an eine Druckluftquelle anschließbar ist und an ihrer im geschlossenen Zustand der Tür den Dichtungsflächen (1.2, 1.2') der Türblätter (1, 1') gegenüberliegenden Seite mit einer sich bei Druckanstieg nach außen wölbenden Dichtungsmembran (10.5) abgeschlossen ist.

6. Schwenkschiebetür nach einem der Ansprüche 1 bis 5, **dadurch gekennzeichnet, daß** jeder Fingerschutzgummi (11, 11') als Dichtungsprofil ausgebildet ist mit einem in der vertikalen Schließkante (1.3, 1.3') des Türblattes (1, 1') befestigten Dichtungsfuß (11.1, 11.1'), Druckkammern, die an den Türantrieb umsteuernde Sensoren anschließbar sind, und einer Luftkammer (11.4, 11.4'), die an eine Druckluftquelle anschließbar ist und an ihrer, im geschlossenen Zustand der Tür dem jeweils anderen Fingerschutzgummi (11', 11) gegenüberliegenden Seite mit einer sich bei Druckanstieg nach außen wölbenden Dichtungsmembran (11.5, 11.5') abgeschlossen ist.

7. Schwenkschiebetür nach Anspruch 6, **dadurch gekennzeichnet, daß** bei mindestens einem der einander gegenüberliegenden Fingerschutzgummis (11, 11') zu beiden Seiten der Luftkammer (11.4) an der dem anderen Fingerschutzgummi (11') gegenüberliegenden Außenseite zwei symmetrisch zu einer senkrecht zur Dichtungsebene stehenden Mittelebene angeordnete Dichtungslippen (11.2, 11.3) angeordnet sind.

## Claims

1. Double-leafed sliding plug door for passenger transport vehicles with two door leaves which are respectively connected to a carrying member via a parallelogram connecting rod which may be horizontally displaced on a guide element in the longitudinal direction of the vehicle, devices being provided to guide each door leaf in the transverse direction and the longitudinal movement of each door leaf being coordinated with the transverse movement by means of a guide rail rigidly connected to the door frame and in which a guide means connected to the door leaf engages and with a drive device of which the drive force engages each carrying member in the direction of the guide element for its counter-directional movement and in which finger protection rubbers are arranged on the vertical, closing edges of the door leaves facing one another, **characterised in that** within the door frame (2) a circumferential portal frame (3) is arranged into which a complete circumferential inflatable seal (10) is integrated which, in the closed state of the door, sealing surfaces (1.2, 1.2') arranged on the door leaves (1, 1') oppose.

2. Sliding plug door according to claim 1, **characterised in that** the finger protection rubbers are constructed as inflatable seals (11, 11').'

3. Sliding plug door according to claim 1, **characterised in that** the portal frame (3) is constructed as a component part inserted into the door frame and releasably fastened therein by means of screw connections (3.1).

4. Sliding plug door according to any of claims 1 to 3, **characterised in that** the finger protection rubbers (11, 11') comprise projections (11.6, 11.6') in the region of the upper and lower ends of the closing edges (1.3, 1.3'), respectively oriented upwardly and downwardly on the outwardly facing sides, and of which the inner surfaces are aligned with the sealing surfaces (1.2, 1.2') of the door leaves (1, 1') and against which, in the closed state of the door, the circumferential inflatable seal (10) of the portal frame (3) bears.

5. Sliding plug door according to any of claims 1 to 4, **characterised in that** the circumferential inflatable seal (10) arranged in the portal frame (3) is constructed as a sealing strip with a sealing foot (10.1) fastened in the portal frame and two sealing lips (10.2, 10.3) arranged symmetrically to a middle plane located perpendicular to the sealing plane, the inflatable sealing part being arranged between the sealing lips with an air chamber (10.4) which may be connected to a compressed air source and, in the closed state of the door, is sealed on its side opposing the sealing surfaces (1.2, 1.2') of the door leaves (1, 1') with a sealing membrane (10.5) bulging outwardly on pressure build-up.

6. Sliding plug door according to any of claims 1 to 5, **characterised in that** each finger protection rubber (11, 11') is constructed as a sealing strip with a sealing foot (11.1, 11.1') fastened in the vertical closing edge (1.3, 1.3') of the door leaf (1, 1'), pressure chambers which may be connected to sensors reversing the door drive and an air chamber (11.4, 11.4') which may be connected to a compressed air source and, in the closed state of the door, on its side opposing the respective other finger protection rubber (11', 11) is sealed with a sealing membrane (11.5, 11.5') bulging outwardly on pressure build-up.

7. Sliding plug door according to claim 6, **characterised in that** in at least one of the finger protection rubbers (11. 11') opposing one another on both sides of the air chamber (11.4), on the outer face opposing the other finger protection rubber (11'), two sealing lips (11.2, 11.3) are arranged symmetrically to a middle plane located perpendicular to the sealing plane.

## Revendications

1. Porte coulissante-pivotante à deux battants pour véhicules de transport de personnes avec deux vantaux qui sont raccordés chacun au moyen de tiges en parallélogramme à un élément support qui peut coulisser horizontalement sur un élément de guidage dans le sens longitudinal du véhicule, des dispositifs étant prévus pour le guidage de chaque vantail de porte dans le sens transversal et le déplacement longitudinal de chaque vantail de porte étant coordonné avec le déplacement transversal au moyen d'un rail de guidage raccordé au vantail de porte, dans lequel s'engrène un moyen de guidage raccordé au vantail de porte, et avec un dispositif d'entraînement dont la force descensionnelle dans la direction de l'élément de guidage est appliquée sur chaque élément support pour son déplacement opposé et dans lequel sont prévus des caoutchoucs de protection des doigts sur les bords de fermeture des vantaux de porte verticaux tournés les uns vers les autres,**caractérisé en ce qu'**à l'intérieur du cadre de porte (2) est placé un portique (3) circulaire dans lequel est intégré un joint d'étanchéité (10) complètement circulaire gonflable, auquel font face des surfaces d'étanchéité (1.2, 1.2') disposées dans les vantaux de porte (1, 1') lorsque la porte est à l'état fermé.

2. Porte coulissante-pivotante selon la revendication 1, **caractérisé en ce que** les caoutchoucs de protection des doigts sont configurés comme des joints d'étanchéité gonflables (11, 11').

3. Porte coulissante-pivotante selon la revendication 1, **caractérisé en ce que** le portique (3) est configuré comme un élément de construction inséré dans le cadre de porte et fixé de manière détachable à celui-ci à l'aide de raccords vissés (3.1) .

4. Porte coulissante-pivotante selon l'une quelconque des revendications 1 à 3, **caractérisé en ce que** les caoutchoucs de protection des doigts (11, 11') comportent, dans la zone des extrémités supérieures et inférieures des bords de fermeture (1.3, 1.3') sur les côtés dirigés vers l'extérieur, des épaulements (11.6, 11.6') dirigés chacun vers le haut ou vers le bas dont les surfaces intérieures sont alignées sur les surfaces d'étanchéité (1.2, 1.2') des vantaux de porte (1, 1') et contre lesquels le joint d'étanchéité (10) circulaire gonflable du portique (3) s'appuie lorsque la porte est à l'état fermé.

5. Porte coulissante-pivotante selon l'une quelconque des revendications 1 à 4, **caractérisé en ce que** le joint d'étanchéité (10) circulaire gonflable dans le portique (3) est configuré comme un joint d'étanchéité profilé avec une base d'étanchéité (10.1) fixée dans le portique et deux lèvres d'étanchéité (10.2, 10.3) placées symétriquement à un plan médian placé perpendiculairement au plan d'étanchéité, la partie d'étanchéité gonflable étant disposée entre les lèvres d'étanchéité avec une chambre d'air (10.4) qui peut être raccordée à une source d'air comprimé et qui, sur son côté opposé aux surfaces d'étanchéité (1.2, 1.2') des vantaux de porte (1, 1') lorsque la porte est à l'état fermé, est obturée par une membrane d'étanchéité (10.5) se bombant vers l'extérieur en cas d'élévation de pression.

6. Porte coulissante-pivotante selon l'une quelconque des revendications 1 à 5, **caractérisé en ce que** chaque caoutchouc de protection des doigts (11, 11') est configuré comme un joint d'étanchéité profilé avec une base d'étanchéité (11.1, 11.1') fixée dans le bord de fermeture vertical (1.3, 1.3') du vantail de porte (1, 1'), des chambres de compression qui peuvent être raccordées à des détecteurs inversant le mouvement de l'entraînement de porte, et une chambre d'air (11.4, 11.4') qui peut être raccordée à une source d'air comprimé et qui, sur son côté opposé à chaque autre caoutchouc de protection des doigts (11, 11') lorsque la porte est à l'état fermé, est obturée par une membrane d'étanchéité (11.5, 11.5') se bombant vers l'extérieur en cas d'élévation de pression.

7. Porte coulissante-pivotante selon la revendication 6, **caractérisé en ce que** deux lèvres d'étanchéité (11.2, 11.3) placées symétriquement à un plan médian placé perpendiculairement au plan d'étanchéité sont disposées dans au moins l'un des caoutchoucs de protection des doigts opposés (11, 11') des deux côtés de la chambre d'air (11.4) sur le côté extérieur opposé à l'autre caoutchouc de protection des doigts (11').
